(19) **Europäisches Patentamt**
**European Patent Office**
**Office européen des brevets**

(11) **EP 4 187 671 B1**

(12) **EUROPEAN PATENT SPECIFICATION**

(45) Date of publication and mention
of the grant of the patent:
**01.04.2026 Bulletin 2026/14**

(21) Application number: **21846968.2**

(22) Date of filing: **23.07.2021**

(51) International Patent Classification (IPC):
*H01M 4/66* (2006.01)    *H01M 10/0585* (2010.01)
*H01M 10/0562* (2010.01)    *H01M 10/28* (2006.01)
*H01M 10/24* (2006.01)

(52) Cooperative Patent Classification (CPC):
**H01M 10/0562; H01M 4/661; H01M 10/0585;**
**H01M 10/24;** Y02E 60/10; Y02P 70/50

(86) International application number:
**PCT/KR2021/009519**

(87) International publication number:
**WO 2022/019694 (27.01.2022 Gazette 2022/04)**

(54) **ALL-SOLID-STATE BATTERY COMPRISING THIN FILM CURRENT COLLECTOR AND METHOD FOR MANUFACTURING SAME**

FESTKÖRPERBATTERIE MIT DÜNNSCHICHTSTROMKOLLEKTOR UND DESSEN HERSTELLUNGSVERFAHREN

BATTERIE ENTIÈREMENT SOLIDE COMPRENANT UN COLLECTEUR DE COURANT À FILM MINCE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.07.2020 KR 20200091625**

(43) Date of publication of application:
**31.05.2023 Bulletin 2023/22**

(73) Proprietor: **LG Energy Solution, Ltd.**
**Seoul 07335 (KR)**

(72) Inventors:
• **LEE, Jung Pil**
**Daejeon 34122 (KR)**
• **HAN, Hyea Eun**
**Daejeon 34122 (KR)**

• **HAH, Hoe Jin**
**Daejeon 34122 (KR)**
• **CHO, Sung Ju**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
WO-A1-2019/139966      KR-A- 20030 097 627
KR-A- 20150 016 210      KR-B1- 101 442 883
KR-B1- 101 446 677      US-A1- 2016 036 091
US-A1- 2019 214 650      US-A1- 2019 393 505

**Description**

[Technical Field]

The present invention relates to an all-solid-state battery including a thin film current collector and a method of manufacturing the same. More particularly, the present invention relates to an all-solid-state battery including a thin film current collector, wherein interfacial resistance between the current collector and a solid electrolyte is reduced while the overall capacity of the all-solid-state battery is increased as the result of using the thin film current collector, and a method of manufacturing the same.

[Background Art]

The lifespan of a secondary battery using an electrolytic solution is reduced due to consumption of the electrolytic solution during charging and discharging, or the secondary battery overheats or explodes due to leakage or combustion of the electrolytic solution.

In order to improve safety of the secondary battery, various methods, such as provision of a safety device, such as a fuse or a protection circuit, have been considered. In order to solve the above problems, an all-solid-state battery using a solid electrolyte instead of a liquid electrolytic solution has been proposed.

Unlike the conventional secondary battery, the all-solid-state battery is configured such that a positive electrode and a negative electrode are formed on opposite surfaces of a solid electrolyte layer including the solid electrolyte and the solid electrolyte layer also serves as a separator.

Since the all-solid-state battery uses the solid electrolyte instead of the liquid electrolytic solution, there is no evaporation of the electrolytic solution due to temperature change or no leakage of the electrolytic solution due to external impact, whereby the all-solid-state battery is safe against explosion and outbreak of fire. However, since the all-solid-state battery has lower ionic conductivity than the secondary battery using the liquid electrolyte and interfacial formation between the positive electrode, the negative electrode, and the solid electrolyte layer is not easily achieved, interfacial resistance is high. The all-solid-state battery has shortcomings of short lifespan and low output due to such problems.

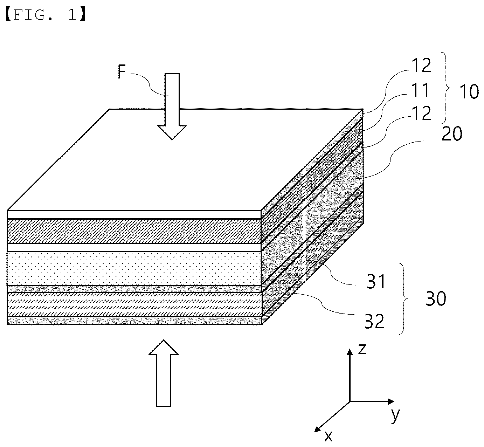

FIG. 1 is a schematic view of a conventional all-solid-state battery.

As can be seen from FIG. 1, the conventional lithium secondary battery includes a positive electrode 10 including a positive electrode current collector 11 and a positive electrode active material layer 12 formed on opposite surfaces thereof by coating, a solid electrolyte layer 20, and a negative electrode 30 including a negative electrode current collector 31 and a negative electrode active material layer 32 formed on opposite surfaces thereof by coating. In order to increase overall capacity of the lithium secondary battery, the negative electrode may be used as a lithium plating and stripping mechanism through a negative electrode current collector alone or using lithium metal without a separate negative electrode active material layer 32, unlike FIG. 1.

In the conventional lithium secondary battery, pressure F is applied to the battery from above and below in order to reduce interfacial resistance between the positive electrode 10 and the solid electrolyte layer 20 and between the solid electrolyte layer 20 and the negative electrode 30. In the case in which the positive electrode 10, the solid electrolyte layer 20, and the negative electrode 30 are not uniform, it is difficult to reduce interfacial resistance merely through pressurization, and short circuit due to growth of lithium dendrites may occur at a portion having different interfacial resistance during charging. In particular, the amount of lithium that is deposited during charging is increased in proportion to an increase in capacity of the positive electrode to achieve high energy density, whereby a short circuit occurrence probability is increased.

Meanwhile, research on a battery using Li plating/stripping has been continuously conducted in order to increase energy density of a battery. In general, a current collector that is used has a thickness of about 10 μm, and therefore it is necessary to further reduce the thickness of the current collector through an additional thinning process in order to increase energy density.

In Patent Document 1, a stack including a positive electrode, a solid electrolyte layer, and a negative electrode is pressurized in order to improve conductivity, electron conductivity, and lithium ion conductivity. However, this patent document does not disclose preventing a cell short circuit phenomenon of a unit cell due to lithium dendrites during charging.

In Patent Document 2, a stack including a positive electrode, a solid electrolyte layer, and a negative electrode is pressurized in order to reduce interfacial resistance. However, this patent document does not disclose reducing stress due to lithium dendrites during charging in order to improve safety of a unit cell.

(Prior Art Documents)

(Patent Document 1) Japanese Patent Application Publication No. 2018-181451 (2018.11.15)
(Patent Document 2) Japanese Patent Application Publication No. 2019-200890 (2019.11.21)

US 2016/036 091 A1 provides a solid lithium secondary battery in which occurrence of short-circuit is suppressed during charging. The object is attained by providing a solid lithium secondary battery comprising an anode current collector, a solid electrolyte layer, a cathode active material layer, and a cathode current collector in this order, wherein the solid electrolyte layer is provided on a surface of the anode current collector, the solid electrolyte layer contains a sulfide solid electrolyte particle, a surface shape of the solid electrolyte layer, which faces the anode current collector, is formed in correspondence with a surface shape of the anode current collector, and 10-point average roughness (Rz) of the surface of the anode current collector on a solid electrolyte layer side, and 10-point average roughness (Rz) of a surface of the solid electrolyte layer on an anode current collector side are in a range of 1.8 $\mu$m to 2.5 $\mu$m, respectively.

US 2019/214 650 A1 relates to an article for forming an electrochemical device. The article comprises a metallic current collector clad with an ion-conducting solid-electrolyte material such that intimate contact between the current collector and the ion conducting solid-electrolyte material is made. A lithium metal anode can be formed in situ between the current collector clad and the ion conducting solid-electrolyte material from lithium ions contained within a cathode material that is placed in contact with the ion conducting solid-electrolyte material. A bipolar electrochemical cell can be constructed from the article.

[Disclosure]

[Technical Problem]

The present invention has been made in view of the above problems, and it is an object of the present invention to reduce interfacial resistance between an electrode having a current collector and a solid electrolyte layer while using a thin film current collector as the current collector.

It is another object of the present invention to increase the ratio of capacity to size of a battery through the use of the thin film current collector.

[Technical Solution]

In order to accomplish the above objects, an all-solid-state battery according to the present invention includes a positive electrode, a solid electrolyte layer, and a negative electrode, wherein the positive electrode or the negative electrode comprises a current collector having a thickness of less than 5 $\mu$m, and the current collector directly faces the solid electrolyte layer, wherein the current collector comprises a metal with high affinity for lithium being at least one selected from the group consisting of metals, comprising Au, Ag, Pt, Zn, Si and Mg, and metal oxides, comprising CuO, ZnO, CoO and MnO, wherein the current collector is thermally treated together with the solid electrolyte layer, and wherein the current collector does not comprise lithium metal.

In addition, the current collector may be formed through a deposition and transfer process.

The present invention provides a method of manufacturing the all-solid-state battery, the method including S1) depositing a metal for current collectors on a release film to form a current collector and S2) transferring the current collector of step S1) to a solid electrolyte layer and performing heat treatment to form an electrode assembly.

In addition, the method may include removing the release film after step S2) or before heat treatment of step S2) .

In addition, in step S2), transferring and performing heat treatment may be simultaneously performed.

The surface of the release film on which the metal is deposited may be coated or surface treated.

Depositing in step S1) may be performed by utilizing one of a vacuum deposition method, a chemical deposition method, a chemical vapor deposition method, and a physical deposition method.

The present invention provides a battery module or a battery pack including the all-solid-state battery mentioned above. In addition, the present invention provides a device having the all-solid-state battery mounted therein.

In the present invention, one or more constructions that do not conflict with each other may be selected and combined from among the above constructions.

[Advantageous Effects]

As is apparent from the above description, in an all-solid-state battery according to the present invention, a thin film current collector is thermally treated together with a solid electrolyte layer, whereby interfacial resistance is reduced, and therefore performance of the all-solid-state battery is improved.

In addition, the thickness of the current collector is small, whereby the ratio of capacity to size of the all-solid-state battery is increased.

[Description of Drawings]

FIG. 1 is a schematic view of a conventional all-solid-state battery.
FIG. 2 is a schematic view of an all-solid-state battery according to the present invention.
FIG. 3 is a schematic view of an all-solid-state battery manufacturing method according to the present invention.

[Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.
In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.
In addition, a description to embody elements through limitation or addition may be applied to all inventions, unless particularly restricted, and does not limit a specific invention.
Also, in the description of the invention and the claims of the present application, singular forms are intended to include plural forms unless mentioned otherwise.
Also, in the description of the invention and the claims of the present application, "or" includes "and" unless mentioned otherwise. Therefore, "including A or B" means three cases, namely, the case including A, the case including B, and the case including A and B.
In addition, all numeric ranges include the lowest value, the highest value, and all intermediate values therebetween unless the context clearly indicates otherwise.
An all-solid-state battery according to the present invention includes a positive electrode, a solid electrolyte layer, and a negative electrode, wherein the positive electrode or the negative electrode is constituted by a current collector having a thickness of less than 5 μm, and the current collector is disposed so as to directly face the solid electrolyte layer, wherein the current collector comprises a metal with high affinity for lithium being at least one selected from the group consisting of metals, comprising Au, Ag, Pt, Zn, Si and Mg, and metal oxides, comprising CuO, ZnO, CoO and MnO, wherein the current collector is thermally treated together with the solid electrolyte layer, and wherein the current collector does not comprise lithium metal.

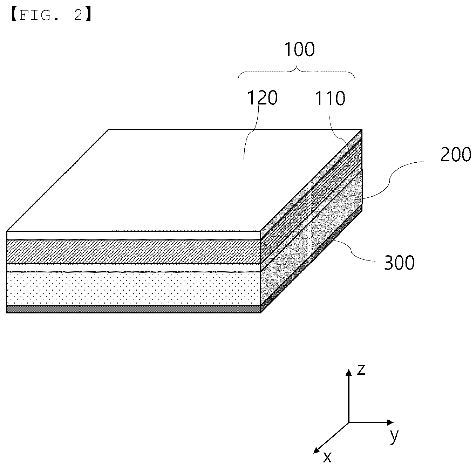

FIG. 2 is a schematic view of the all-solid-state battery according to the present invention.
In the all-solid-state battery according to the present invention, the positive electrode 100 may be constituted by a positive electrode current collector 110 having a thickness of less than 5 μm, wherein the positive electrode current collector 110 may be disposed so as to directly face the solid electrolyte layer 200, and the negative electrode may be constituted by a negative electrode current collector 300 having a thickness of less than 5 μm, wherein the positive electrode current collector 300 may be disposed so as to directly face the solid electrolyte layer 200. Alternatively, both the positive electrode 100 and the negative electrode may each be constituted by an electrode current collector having a thickness of less than 5 μm, wherein the electrode current collector may be disposed so as to directly face the solid electrolyte layer 200. Hereinafter, a description will be given based on the case in which a thin film current collector is used for only the negative electrode with reference to FIG. 2, although no thin film current collector may be used for both the positive electrode and the negative electrode. It is obvious that the thin film current collector may be applied to the positive electrode.
As shown in FIG. 2, the all-solid-state battery according to the present invention is constituted by a positive electrode 100 including a positive electrode current collector 110 and a positive electrode active material layer 120 formed on at least one surface thereof by coating, a solid electrolyte layer 200, and a negative electrode constituted by a negative electrode current collector 300. In one case, the positive electrode may include a positive electrode current collector 110 and a positive electrode active material 120 provided so as to face the solid electrolyte layer 200, and the negative electrode may be constituted by a negative electrode active material layer applied to at least one surface of the negative electrode current collector 300. In another case, both the positive electrode and the negative electrode may each be constituted by an electrode current collector.
For example, the positive electrode 100 may be manufactured using a method of applying a positive electrode mixture of a positive electrode active material constituted by positive electrode active material particles, a conductive agent, and a binder to the positive electrode current collector 110 to form a positive electrode active material 120. A filler may be further added to the positive electrode mixture as needed. In addition, only the positive electrode current collector 110 may be used for the positive electrode, unlike FIG. 2.

In general, the positive electrode current collector 110 is manufactured so as to have a thickness of 3 $\mu$m to 500 $\mu$m. In the case in which only the positive electrode current collector 110 is thermally treated together with the solid electrolyte layer, however, the thickness of the positive electrode current collector 110 may be less than 5 $\mu$m.

The positive electrode current collector 110 is not particularly restricted as long as the positive electrode current collector exhibits high conductivity while the positive electrode current collector does not induce any chemical change in a battery to which the positive electrode current collector is applied. For example, the positive electrode current collector may be made of stainless steel, aluminum, nickel, or titanium. Alternatively, the positive electrode current collector may be made of aluminum or stainless steel, the surface of which is treated with carbon, nickel, titanium, or silver. Specifically, aluminum may be used. The current collector may have a micro-scale uneven pattern formed on the surface thereof so as to increase the force of adhesion to the positive electrode active material. The positive electrode current collector may be configured in any of various forms, such as a film, a sheet, a foil, a net, a porous body, a foam body, and a non-woven fabric body.

In addition to the positive electrode active material particles, the positive electrode active material included in the positive electrode active material layer 120 may be constituted, for example, by a layered compound, such as a lithium nickel oxide ($LiNiO_2$), or a compound substituted with one or more transition metals; a lithium manganese oxide represented by the chemical formula $Li_{1+x}Mn_{2-x}O_4$ (where x = 0 to 0.33) or a lithium manganese oxide, such as $LiMnO_3$, $LiMn_2O_3$, or $LiMnO_2$; a lithium copper oxide ($Li_2CuO_2$); a vanadium oxide, such as $LiV_3O_8$, $LiFe_3O_4$, $V_2O_5$, or $CU_2V_2O_7$; an Ni-sited lithium nickel oxide represented by the chemical formula $LiNi_{1-x}M_xO_2$ (where M = Co, Mn, Al, Cu, Fe, Mg, B, or Ga, and x = 0.01 to 0.3); a lithium manganese composite oxide represented by the chemical formula $LiMn_{2-x}M_xO_2$ (where M = Co, Ni, Fe, Cr, Zn, or Ta, and x = 0.01 to 0.1) or the chemical formula $Li_2Mn_3MO_8$ (where M = Fe, Co, Ni, Cu, or Zn); $LiMn_2O_4$ in which a portion of Li in the chemical formula is replaced by alkaline earth metal ions; a disulfide compound; or $Fe_2(MoO_4)_3$. However, the present invention is not limited thereto.

The positive electrode active material layer 120 may be located on at least one surface of the positive electrode current collector 110. In the case in which the positive electrode current collector 110 is replaced with the current collector according to the present invention, the positive electrode active material layer 120 may be located at only the surface of the positive electrode current collector 110 that faces the solid electrolyte layer 200.

The conductive agent is generally added so that the conductive agent accounts for 0.1 weight% to 30 weight% based on the total weight of the mixture including the positive electrode active material. The conductive agent is not particularly restricted as long as the conductive agent exhibits high conductivity without inducing any chemical change in a battery to which the conductive agent is applied. For example, graphite, such as natural graphite or artificial graphite; carbon black, such as acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; or a conductive material, such as a polyphenylene derivative, may be used as the conductive agent.

The binder, which is included in the positive electrode 100, is a component assisting in binding between the active material and the conductive agent and in binding with the current collector. The binder is generally added in an amount of 0.1 weight% to 30 weight% based on the total weight of the mixture including the positive electrode active material. As examples of the binder, there may be used polyvinylidene fluoride, polyvinyl alcohol, carboxymethylcellulose (CMC), starch, hydroxypropylcellulose, regenerated cellulose, polyvinyl pyrrolidone, tetrafluoroethylene, polyethylene, polypropylene, ethylenepropylene-diene terpolymer, sulfonated ethylene-propylene-diene termonomer, styrene butadiene rubber, fluoro rubber, and various copolymers.

An organic solid electrolyte or an inorganic solid electrolyte may be used for the solid electrolyte layer 200. However, the present invention is not limited thereto. In addition, the solid electrolyte layer 200 may further include a binder, such as polytetrafluoroethylene (PTFE).

For example, a polyethylene derivative, a polyethylene oxide derivative, a polypropylene oxide derivative, a phosphoric acid ester polymer, poly agitation lysine, polyester sulfide, polyvinyl alcohol, polyvinylidene fluoride, or a polymer containing an ionic dissociation group may be used as the organic solid electrolyte.

As an example, the inorganic solid electrolyte may be a sulfide-based solid electrolyte or an oxide-based solid electrolyte.

For example, a nitride or halide of Li, such as $Li_{6.25}La_3Zr_2A_{l0 \cdot 25}O_{12}$, $Li_3PO_4$, $Li_3+XPO_4-XN_x$(LiPON), $Li_3N$, LiI, $Li_5NI_2$, $Li_3N$-LiI-LiOH, $LiSiO_4$, $LiSiO_4$-LiI-LiOH, $Li_2SiS_3$, $Li_4SiO_4$, or $Li_4SiO_4$-LiI-LiOH, may be used as the oxide-based solid electrolyte.

In the present invention, the sulfide-based solid electrolyte is not particularly restricted, and all known sulfide-based materials used in the lithium battery field may be available. Products on the market may be used as the sulfide-based materials, or amorphous sulfide-based materials may be crystallized to manufacture the sulfide-based materials.

For example, a crystalline sulfide-based solid electrolyte, an amorphous sulfide-based solid electrolyte, or a mixture thereof may be used as the sulfide-based solid electrolyte. There are a sulfur-halogen compound, a sulfur-germanium compound, and a sulfur-silicon compound as examples of available composite compounds. Specifically, a sulfide, such as $SiS_2$, $GeS_2$, or $B_2S_3$, may be included, and $Li_3PO_4$, halogen, or a halogen compound may be added. Preferably, a sulfide-based electrolyte capable of implementing a lithium ion conductivity of $10^{-4}$ S/cm or more is used.

Typically, $Li_6PS_5Cl$ (LPSCI), Thio-LISICON($Li_{3.25}Ge_{0.25}P_{0.75}S_4$), $Li_2S$-$P_2S_5$-LiCl, $Li_2S$-$SiS_2$, LiI-$Li_2S$-$SiS_2$, LiI-$Li_2S$-$P_2S_5$, LiI-$Li_2S$-$P_2O_5$, LiI-$Li_3PO_4$-$P_2S_5$, $Li_2S$-$P_2S_5$, $Li_3PS_4$, $Li_7P_3S_{11}$, LiI-$Li_2S$-$B_2S_3$, $Li_3PO_4$-$Li_2S$-$Si_2S$, $Li_3PO_4$-$Li_2S$-$SiS_2$, $LiPO_4$-$Li_2S$-SiS, $Li_{10}GeP_2S_{12}$, $Li_{9.54}Si_{1.74}P_{1.44}S_{11.7}Cl_{0.3}$, and $Li_7P_3S_{11}$ are included.

The negative electrode according to the present invention may be constituted by only the negative electrode current collector 300. Alternatively, in the case in which the positive electrode 100 is constituted by only the positive electrode current collector 110, a negative electrode having a negative electrode active material applied to at least one surface of the negative electrode current collector 300 may be used.

In the case in which a negative electrode having a negative electrode active material applied to at least one surface of an negative electrode current collector is used as the negative electrode, the negative electrode current collector 300 is generally manufactured so as to have a thickness of 3 $\mu$m to 500 $\mu$m. The negative electrode current collector 300 is not particularly restricted, as long as the negative electrode current collector exhibits high conductivity while the negative electrode current collector does not induce any chemical change in a battery to which the negative electrode current collector is applied. For example, the negative electrode current collector may be made of copper, stainless steel, aluminum, nickel, titanium, or plastic carbon. Alternatively, the negative electrode current collector may be made of copper or stainless steel, the surface of which is treated with carbon, nickel, titanium, or silver, or an aluminum-cadmium alloy. In addition, the negative electrode current collector may have a micro-scale uneven pattern formed on the surface thereof so as to increase the force of adhesion of the negative electrode active material, in the same manner as the positive electrode current collector 110. The negative electrode current collector may be configured in any of various forms, such as a film, a sheet, a foil, a net, a porous body, a foam body, and a non-woven fabric body.

As the negative electrode active material, for example, there may be used carbon, such as a non-graphitizing carbon or a graphite-based carbon; a metal composite oxide, such as $Li_xFe_2O_3$ ($0 \leq x \leq 1$), $Li_xWO_2$ ($0 \leq x \leq 1$), $Sn_xMe_{1-x}Me'_yO_z$ (Me: Mn, Fe, Pb, Ge; Me': Al, B, P, Si, Group 1, 2, and 3 elements of the periodic table, halogen; $0 < x \leq 1$; $1 \leq y \leq 3$; $1 \leq z \leq 8$); lithium metal; a lithium alloy; a silicon-based alloy; a tin-based alloy; a metal oxide, such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, or $Bi_2O_5$; a conductive polymer, such as polyacetylene; or a Li-Co-Ni based material.

In the case in which only the negative electrode current collector 300 is used for the negative electrode, the negative electrode current collector 300 has a thickness of less than 5 $\mu$m, and the negative electrode current collector 300 is disposed so as to directly face the solid electrolyte layer 200.

The negative electrode current collector 300 may include a metal with high affinity for lithium. The metal with high affinity for lithium may be at least one selected from the group consisting of metals, including Au, Ag, Pt, Zn, Si, and Mg, and metal oxides, including CuO, ZnO, CoO, and MnO.

Since the negative electrode current collector 300 includes a metal with high affinity for lithium, it is possible to adjust the position at which lithium dendrites are formed in the all-solid-state battery.

The negative electrode current collector 300 may be thermally treated together with the solid electrolyte layer 200. In the case in which the negative electrode current collector 300 is thermally treated together with the solid electrolyte layer 200, interfacial resistance between the negative electrode current collector 300 and the solid electrolyte layer 200 is reduced. Since the negative electrode current collector 300 is separately formed and is then thermally treated together with the solid electrolyte layer 200, the negative electrode current collector 300 and the solid electrolyte layer 200 do not react with each other. Of course, the negative electrode current collector 300 may be directly deposited on the solid electrolyte layer 200.

The positive electrode current collector 110 or the negative electrode current collector 300 includes no lithium metal. The reason for this is that, in consideration of the fact that the thickness of the positive electrode current collector 110 or the negative electrode current collector 300 is less than 5 $\mu$m, the solid electrolyte layer 200 may be damaged even though formation of lithium dendrites is adjusted, and therefore short circuit may occur. Consequently, the all-solid-state battery may be an all-solid-state battery that does not use lithium, like a nickel-cadmium battery, a nickel-manganese battery, a nickel-hydride battery, or a metal-air battery.

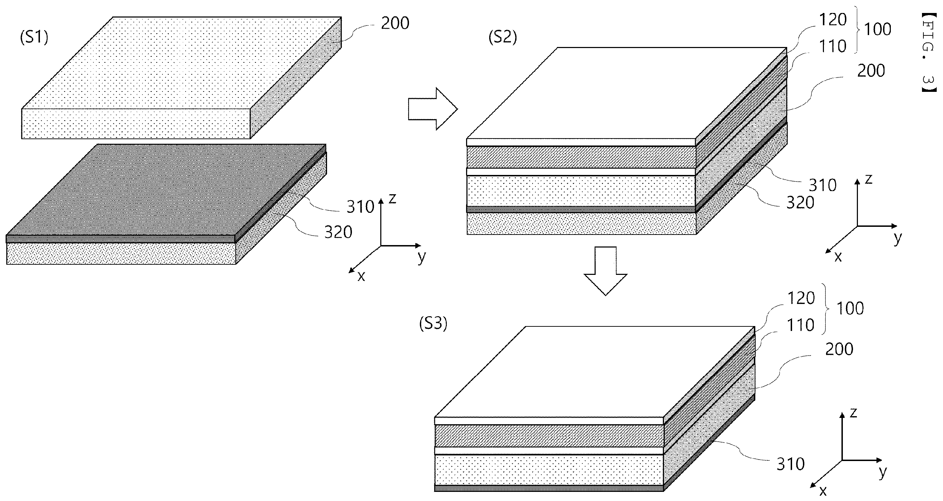

FIG. 3 is a schematic view of an all-solid-state battery manufacturing method according to the present invention.

As shown in FIG. 3, the all-solid-state battery manufacturing method according to the present invention includes S1) a step of depositing a metal 310 for current collectors on a release film 320 to form a current collector, S2) a step of transferring the current collector of step S1) to a solid electrolyte layer 200 and performing heat treatment to form an electrode assembly, and S3) a step of removing the release film 320 from the electrode assembly.

The metal used for the positive electrode current collector or the negative electrode current collector may be used as the metal 310 for current collectors. The metal used for the positive electrode current collector and the metal used for the negative electrode current collector that can be used as the metal 310 for current collectors have been described above, and therefore a description thereof will be omitted.

All known release films may be used as the release film 320. As an example, any release film may be used as long as the release film 320 is made of a material that has low surface roughness and is capable of being easily peeled such that the release film 320 is not damaged when the metal 310 for current collectors is deposited and no residual is left when the metal 310 for current collectors is peeled. For example, the release film 320 may be made of a synthetic resin, such as polyethylene, polypropylene, an ethylene-vinyl acetate copolymer, an ethylene-vinyl alcohol copolymer, or polyethylene terephthalate, or metal foil.

The surface of the release film 320 that faces at least the metal 310 for current collectors may be coated or treated such that no residual is left when the metal 310 for current collectors is peeled. Surface reforming treatment, such as plasma treatment or sulfonation treatment, or peeling treatment, such as silicone treatment, long cyclic alkyl treatment, or fluorine treatment, may be used as an example of the surface treatment. In addition, the release film 320 may be made of a material that is evaporated by heat treatment such that S3) the step of removing the release film 320 from the electrode assembly is not performed.

In addition, adhesive forces at opposite surfaces of the release film 320 may be different from each other such that a process of peeling the metal 310 for current collectors is easily performed. The adhesive force at the surface of the release film that faces the metal 310 for current collectors may be lower than the adhesive force at the opposite surface of the release film.

Deposition in step S1) may be performed using a vacuum deposition method, a chemical deposition method, a chemical vapor deposition method, a physical deposition method, a physical vapor deposition method, a thermal deposition method, an electron-beam evaporation method, or a sputtering method. However, the present invention is not limited thereto, and various deposition methods used in the art to which the present invention pertains may be used.

In step S2), the current collector is transferred to the solid electrolyte layer 200 and is then thermally treated to form an electrode assembly. At this time, transfer and heat treatment may be simultaneously performed. Transfer may be performed using a roll press. At this time, the roll press may simultaneously perform heating and pressurization.

At this time, the temperature applied to the current collector and the solid electrolyte layer 200 may be 40°C to 200°C, specifically 100°C to 150°C. In the case in which the temperature is lower than 40°C, a desired extent of contact between the current collector and the solid electrolyte layer 200 is not achieved, which is undesirable. In the case in which the temperature is higher than 200°C, adhesive force may be reduced or the solid electrolyte layer 200 may be deformed due to material denaturation due to side reaction or reduction in performance of the binder, which is also undesirable.

Heat treatment time may be about 6 hours to 48 hours, specifically about 12 hours to 24 hours. In the case in which the time is less than 6 hours, an effect of improvement due to heat treatment may be insignificant, which is undesirable. In the case in which the time is greater than 48 hours, processability may be reduced, which is also undesirable.

Pressure for pressurization may be about 1 ton to about 3 ton, specifically about 1.5 ton to about 2 ton. In the case in which the pressure is greater than 3 ton, the solid electrolyte layer may be damaged. In the case in which the pressure is less than 1 ton, an effect of reducing interfacial resistance between the current collector and the solid electrolyte layer 200 may be insignificant.

Pressurization time may be about 1 minute to about 24 hours. The most preferable pressurization time range may be about 1.5 minutes to about 2.5 minutes. In the case in which the pressurization time is greater than 24 hours, the solid electrolyte layer 200 may be structurally deformed. In the case in which the pressurization time is less than a minute, an effect of reducing interfacial resistance between the current collector and the solid electrolyte layer 200 may be insignificant.

In step S3), the release film 320 is removed from the electrode assembly. The metal 310 for current collectors may be peeled in the state in which the release film 320 is attached to a roll or a substrate that has high force of adhesion with the release film 320. The metal 310 for current collectors may be peeled due to a difference in adhesive force between the surface of the release film 320 that faces the metal 310 for current collectors and the opposite surface of the release film. In addition, the release film 320 may be made of a material that is evaporated by heat treatment, as described above, such that the release film is evaporated by heat treatment in step S2).

Hereinafter, the present invention will be described based on comparison between Example according to the present invention and Comparative Examples according to the conventional art through Experimental Examples.

(Experimental Example 1)

Silver coated on a PET release film by deposition so as to have a thickness of 1 μm (Manufacturing Example 1), silver coated on a PET release film by deposition so as to have a thickness of 2 μm (Manufacturing Example 2), gold coated on a PET release film by deposition so as to have a thickness of 1 μm (Manufacturing Example 3), non-deposited nickel foil having a thickness of 11 μm (Manufacturing Example 4), and non-deposited SUS304 foil having a thickness of 10 μm (Manufacturing Example 5) were compared with each other in terms of electrical conductivity, and the results are shown in Table 1 below. The electrical conductivity was measured for samples each having a size of 5x5 cm$^2$ using a 4-point probe instrument. At this time, each sample was partitioned into 25 sections, the average resistance R$_s$ value of values measured for the respective sections was obtained, and resistivity $\rho_{cal}$ of each of the materials used in Manufacturing Example 1 to Manufacturing Example 5 was calculated using the following equation. The results are shown in Table 1 below.

$$\rho_{cal} = R_s \times thickness \ (\mu m)$$

Electrical conductivity may be calculated as the reciprocal of resistivity $\rho_{cal}$. It can be seen that the smaller the value of resistivity, the higher the electrical conductivity.

In Table 1 below, $\rho_{bulk}$ indicates the inherent resistivity value of each of the materials used in Manufacturing Example 1 to Manufacturing Example 5.

[Table 1]

|  | R$_s$ ($\rho$/t, $\Omega$/sq) | Thickness ($\mu$m) | $\rho_{cal}$ ($\mu\Omega\cdot$cm) | $\rho_{bulk}$ ($\mu\Omega\cdot$cm) |
|---|---|---|---|---|
| Manufacturing Example 1 | 1.759X10$^{-2}$ | 1 | 1.76 | 1.62 |
| Manufacturing Example 2 | 0.875X10$^{-2}$ | 2 | 1.75 | 1. 62 |
| Manufacturing Example 3 | 2.534X10$^{-2}$ | 1 | 2.53 | 2.4 |
| Manufacturing Example 4 | 0.735X10$^{-2}$ | 11 | 8.09 | 7.24 |
| Manufacturing Example 5 | 7.43X10$^{-2}$ | 10 | 74.3 | 72 |

Referring to Table 1 above, it can be seen that resistivity $\rho_{cal}$ of each of the materials according to Manufacturing Example 1 to Manufacturing Example 5 calculated using the above equation is similar to inherent resistivity $\rho_{bulk}$ thereof, whereby reliability of the calculated value of resistivity $\rho_{cal}$ is high.

As shown in Table 1, Manufacturing Examples 1 and 2, in which silver with high affinity for lithium was formed as a thin film, have more similar average resistance values than Manufacturing Example 4, in which gold was formed as a thin film, when compared to average resistance of Manufacturing Example 4, in which a general nickel current collector was used.

In particular, Manufacturing Example 1, in which silver having a thickness of 1 $\mu$m was deposited on the PET release film, has much lower average resistance than the SUS304 current collector of Manufacturing Example 5 although the thickness of silver is very small, and therefore Manufacturing Example 1 exhibits very excellent electrical conductivity.

Consequently, it can be seen that each of silver coated on the PET release film and gold coated on the PET release film is capable of serving as a current collector like nickel or SUS304.

(Experimental Example 2)

The current collector of Manufacturing Example 1 and a solid electrolyte layer were bonded to each other, and interfacial resistance therebetween was measured before heat treatment and after heat treatment under vacuum at 100°C for 12 hours. The results are shown in Table 2.

The solid electrolyte layer was manufactured by dispersing and stirring argyrodite (Li$_6$PS$_5$Cl), as a solid electrolyte, and PTFE, as a binder, in anisole in a weight ratio of 95:5 to form a solid electrolyte layer slurry, coating a PET release film with the solid electrolyte layer slurry, and drying the solid electrolyte layer slurry under vacuum at 100°C for 12 hours.

[Table 2]

|  | Interfacial resistance ($\Omega$) |
|---|---|
| Before heat treatment | 7.2 |
| After heat treatment | 1.7 |

(Experimental Example 3)

In Experimental Example 3, experiments were conducted on an all-solid-state battery including a positive electrode, a solid electrolyte layer, and a negative electrode according to each of Example 1, Comparative Example 1, and Comparative Example 2 based on Experimental Example 1 and Experimental Example 2.

# EP 4 187 671 B1

NCM811(LiNi$_{0.8}$Co$_{0.1}$Mn$_{0.2}$O$_2$), as a positive electrode active material, argyrodite (Li$_6$PS$_5$Cl), as a solid electrolyte, carbon, as a conductive agent, and PTFE, as a binder polymer, were dispersed and stirred in anisole in a weight ratio of 77.5:19.5:1.5:1.5 to manufacture a positive electrode slurry. The positive electrode slurry was applied to an aluminum current collector having a thickness of 14 $\mu$m using a doctor blade, and was dried under vacuum at 100°C for 12 hours to manufacture a positive electrode.

Argyrodite (Li$_6$PS$_5$Cl), as a solid electrolyte, and PTFE, as a binder polymer, were dispersed and stirred in anisole in a weight ratio of 95:5 to manufacture a solid electrolyte layer slurry. The solid electrolyte layer slurry was applied to a PET release film, and was dried under vacuum at 100°C for 12 hours to manufacture a solid electrolyte layer.

The positive electrode, the solid electrolyte layer, and a negative electrode according to each of Example 1, Comparative Example 1, and Comparative Example 2 were sequentially stacked to manufacture a battery.

In Experimental Example 3, the all-solid-state battery was charged and discharged first once under a condition of 60°C (initial charging: 4.25 V at 0.05 C in CC, cut off at 0.01 C, initial discharging: discharged to 3 V at 0.05 C in CC) to measure output efficiency and short circuit occurrence rate. The results are shown in Table 3.

(Example 1)

In Example 1, an electrode assembly was manufactured using the negative electrode according to Manufacturing Example 1, and the electrode assembly was thermally treated at 100°C for 12 hours.

(Comparative Example 1)

In Comparative Example 1, a battery was manufactured in the same manner as Example 1 except that a stack of nickel having a thickness of 11 $\mu$m according to Manufacturing Example 4 was used as the negative electrode.

(Comparative Example 2)

In Comparative Example 2, an electrode assembly was manufactured using the negative electrode according to Manufacturing Example 1, but the electrode assembly was not thermally treated.

[Table 3]

| | CC charge (mAh/g) | CC discharge (mAh/g) | Efficiency (%) | Short circuit occurrence rate (%) |
|---|---|---|---|---|
| Example 1 | 220 | 197 | 89.5 | 0 |
| Comparative Example 1 | 207 | 183 | 88.4 | 67 |
| Comparative Example 2 | 210 | 185 | 88.1 | 33 |

Referring to Table 3 above, it can be seen that charge and discharge capacities of the battery according to Example 1, which was thermally treated, are higher than charge and discharge capacities of the battery according to Comparative Example 2, which was not thermally treated, due to reduced interfacial resistance thereof. In addition, it can be seen that the short circuit occurrence rate that occurs during charging is reduced as the result of the current collector being made of a material with high affinity for lithium.

In addition, it can be seen that, when comparing the current collectors according to Example 1 and Comparative Example 1 with each other, the thickness of the current collector according to Example 1 is only about 9% of the thickness of the current collector according to Comparative Example 1, and therefore the thickness of a cell according to Example 1 is less than the thickness of a cell according to Comparative Example 1. In addition, it can be seen that, when the thickness of the positive electrode is 50 $\mu$m and the thickness of the solid electrolyte layer is 30 $\mu$m, energy density of the cell according to Example 1 is 12.3% higher than energy density of the cell according to Comparative Example 1.

In addition, the present invention provides a battery module or a battery pack including the all-solid-state battery and a device including the battery pack. The battery pack and the device are well known in the art to which the present invention pertains, and thus a detailed description thereof will be omitted.

For example, the device may be a laptop computer, a netbook computer, a tablet PC, a mobile phone, an MP3 player, a wearable electronic device, a power tool, an electric vehicle (EV), a hybrid electric vehicle (HEV), a plug-in hybrid electric vehicle (PHEV), an electric bicycle (E-bike), an electric scooter (E-scooter), an electric golf cart, or an energy storage system. However, the present invention is not limited thereto.

9

**EP 4 187 671 B1**

(Description of Reference Symbols)

10, 100: Positive electrodes
11, 110: Positive electrode current collectors
12, 120: Positive electrode active material layers
20, 200: Solid electrolyte layers
30: Negative electrode
31, 300: Negative electrode current collectors
310: Metal for current collectors
32: Negative electrode active material layer
320: Release film
F: Pressure

[Industrial Applicability]

As is apparent from the above description, in an all-solid-state battery according to the present invention, a thin film current collector is thermally treated together with a solid electrolyte layer, whereby interfacial resistance is reduced, and therefore performance of the all-solid-state battery is improved.

In addition, the thickness of the current collector is small, whereby the ratio of capacity to size of the all-solid-state battery is increased.

**Claims**

1. An all-solid-state battery comprising:

   a positive electrode (100);
   a solid electrolyte layer (200); and
   a negative electrode,
   wherein the positive electrode (100) or the negative electrode (300) comprises a current collector (110, 300) having a thickness of less than 5 $\mu$m, and
   wherein the current collector (110, 300) directly faces the solid electrolyte layer (200),
   wherein the current collector (110, 300) comprises a metal with high affinity for lithium being at least one selected from the group consisting of metals, comprising Au, Ag, Pt, Zn, Si and Mg, and metal oxides, comprising CuO, ZnO, CoO and MnO,
   wherein the current collector (110, 300) is thermally treated together with the solid electrolyte layer (200), and
   wherein the current collector (110, 300) does not comprise lithium metal.

2. The all-solid-state battery according to claim 1, wherein the current collector (110, 300) is formed through a deposition and transfer process.

3. A method of manufacturing the all-solid-state battery according to any one of claims 1 to 2, the method comprising:

   S1) depositing a metal for current collectors (310) on a release film (320) to form a current collector (110, 300); and
   S2) transferring the current collector (110, 300) of step S1) to a solid electrolyte layer (200) and performing heat treatment to form an electrode assembly.

4. The method according to claim 3, comprising removing the release film (320) after step S2) or before heat treatment of step S2).

5. The method according to claim 3, wherein, in step S2), transferring and performing heat treatment are simultaneously performed.

6. The method according to claim 3, wherein a surface of the release film (320) on which the metal is deposited is coated or surface treated.

**7.** The method according to claim 3, wherein depositing in step S1) is performed by utilizing one of a vacuum deposition method, a chemical deposition method, a chemical vapor deposition method, and a physical deposition method.

**Patentansprüche**

**1.** Festkörperbatterie, umfassend:

eine positive Elektrode (100);
eine Festelektrolytschicht (200); und
eine negative Elektrode,
wobei die positive Elektrode (100) oder die negative Elektrode (300) einen Stromabnehmer (110, 300) mit einer Dicke von weniger als 5 μm umfasst, und
wobei der Stromabnehmer (110, 300) der Festelektrolytschicht (200) direkt zugewandt ist,
wobei der Stromabnehmer (110, 300) ein Metall mit hoher Affinität für Lithium umfasst, das mindestens eines ausgewählt aus der Gruppe bestehend aus Metallen, umfassend Au, Ag, Pt, Zn, Si und Mg, und Metalloxiden, umfassend CuO, ZnO, CoO und MnO, ist,
wobei der Stromabnehmer (110, 300) zusammen mit der Festelektrolytschicht (200) thermisch behandelt ist, und
wobei der Stromabnehmer (110, 300) kein Lithiummetall umfasst.

**2.** Festkörperbatterie nach Anspruch 1, wobei der Stromabnehmer (110, 300) durch einen Abscheidungs- und Übertragungsprozess gebildet ist.

**3.** Verfahren zum Herstellen der Festkörperbatterie nach einem der Ansprüche 1 bis 2, wobei das Verfahren umfasst:

S1) Abscheiden eines Metalls für Stromabnehmer (310) auf einem Trennfilm (320), um einen Stromabnehmer (110, 300) zu bilden; und
S2) Übertragen des Stromabnehmers (110, 300) von Schritt S1) auf eine Festelektrolytschicht (200) und Durchführen einer Wärmebehandlung, um eine Elektrodenanordnung zu bilden.

**4.** Verfahren nach Anspruch 3, umfassend das Entfernen des Trennfilms (320) nach Schritt S2) oder vor der Wärmebehandlung von Schritt S2).

**5.** Verfahren nach Anspruch 3, wobei in Schritt S2) das Übertragen und das Durchführen der Wärmebehandlung gleichzeitig durchgeführt werden.

**6.** Verfahren nach Anspruch 3, wobei eine Oberfläche des Trennfilms (320), auf der das Metall abgeschieden wird, beschichtet oder oberflächenbehandelt wird.

**7.** Verfahren nach Anspruch 3, wobei das Abscheiden in Schritt S1) unter Verwendung eines von einem Vakuumabscheidungsverfahren, einem chemischen Abscheidungsverfahren, einem chemischen Gasphasenabscheidungsverfahren und einem physikalischen Abscheidungsverfahren durchgeführt wird.

**Revendications**

**1.** Batterie à l'état solide, comprenant :

une électrode positive (100) ;
une couche d'électrolyte solide (200) ; et
une électrode négative,
l'électrode positive (100) ou l'électrode négative (300) comprenant un collecteur de courant (110, 300) mesurant moins de 5 μm d'épaisseur, et
le collecteur de courant (110, 300) faisant face directement à la couche d'électrolyte solide (200),
le collecteur de courant (110, 300) comprenant un métal présentant une grande affinité pour le lithium, et étant au moins un sélectionné dans le groupe composé de métaux, comprenant les suivants : Au, Ag, Pt, Zn, Si et Mg, et d'oxydes métalliques, comprenant les suivants : CuO, ZnO, CoO et MnO,
le collecteur de courant (110, 300) étant traité thermiquement conjointement avec la couche d'électrolyte solide (200), et
le collecteur de courant (110, 300) ne comprenant pas de lithium métallique.

2. Batterie à l'état solide selon la revendication 1, le collecteur de courant (110, 300) étant formé par le biais d'un processus de dépôt et de transfert.

3. Procédé de fabrication de la batterie à l'état solide selon une quelconque des revendications 1 à 2, le procédé comprenant :

S1) le dépôt d'un métal pour collecteurs de courant (310) sur un film de démoulage (320) pour former un collecteur de courant (110, 300) ; et
S2) le transfert du collecteur de courant (110, 300) de l'étape S1) sur une couche d'électrolyte solide (200) et l'exécution d'un traitement thermique pour réaliser l'ensemble d'électrode.

4. Procédé selon la revendication 3, comprenant l'enlèvement du film de démoulage (320) après l'étape S2) ou avant le traitement thermique de l'étape S2).

5. Procédé selon la revendication 3, dans lequel, à l'étape S2), le transfert et le traitement thermique sont effectués simultanément.

6. Procédé selon la revendication 3, une surface du film de démoulage (320), sur lequel le métal est déposé, est revêtue ou subit un traitement de surface.

7. Procédé selon la revendication 3, le dépôt à l'étape S1) étant effectué en utilisant un des suivants : procédé de dépôt sous vide, procédé de dépôt chimique, procédé de dépôt chimique en phase vapeur, et procédé de dépôt physique.

【FIG. 1】

【FIG. 2】

【FIG. 3】

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018181451 A
- JP 2019200890 A
- US 2016036091 A1
- US 2019214650 A1